# FASCICULE DE BREVET EUROPEEN

(11) **EP 3 692 251 B1**
(45) Date de publication et mention de la délivrance du brevet: **16.10.2024**
(21) Numéro de dépôt: 18793456.7
(22) Date de dépôt: 27.09.2018
(51) Int. Cl.: F02M 26/52, F16K 31/04, F02M 26/67, F16K 1/52, F16K 31/53, F16K 31/50, F16K 37/00, F02M 26/54, F02M 26/74

(54) **ACTIONNEUR ET VANNE DE CIRCULATION DE FLUIDE LE COMPRENANT**
AKTUATOR UND FLUIDZIRKULATIONSVENTIL DENSELBEN UMFASSEND
ACTUATOR AND FLUID CIRCULATION VALVE COMPRISING IT

(30) Priorité: 04.10.2017 FR 1759302
(43) Date de publication de la demande: 12.08.2020
(73) Titulaire: Valeo Electrification, 95800 Cergy (FR)
(72) Inventeur: BESNARD, Mickael, 95892 Cergy Pontoise (FR); GAUTIER, Sylvain, 95892 Cergy Pontoise (FR); FAVELIER, Sylvain, 95892 Cergy Pontoise (FR)
(74) Mandataire: Valeo Powertrain Systems
(86) Numéro de dépôt international: PCT/FR2018/052381
(87) Numéro de publication internationale: WO 2019/068991

(56) Documents cités:
- EP-A1- 1 526 271
- EP-A2- 2 851 549
- WO-A1-2016/062357
- DE-A1- 102015 108 155
- FR-A1- 2 947 027
- KR-A- 20160 016 008
- US-A- 5 351 935

## Description

L'invention concerne un actionneur, destiné à être intégré dans une vanne pour un moteur de véhicule automobile, et une vanne de circulation de fluide comportant un tel actionneur.

En particulier, le domaine de la présente invention est celui des équipements pour l'alimentation du moteur thermique, notamment de véhicule automobile, par exemple les actionneurs ou vannes doseuses d'air qui participent au fonctionnement des moteurs thermiques et arrangés dans un circuit d'air du moteur thermique. Au sens de l'invention, on désigne par « circuit d'air de moteur thermique », le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (« EGR » en anglais).

Il est connu, par exemple des documents WO2016/062357 et FR2947027, des vannes de régulation de débit d'un gaz comportant un corps présentant un conduit de passage du fluide, un obturateur, par exemple une soupape, un arbre de commande de l'obturateur s'étendant longitudinalement selon un axe et libre en translation selon l'axe longitudinal, et un organe d'entraînement en translation dudit arbre de commande. La translation de la soupape permet de régler le débit de fluide circulant dans le conduit. Ainsi, l'obturateur forme un organe de régulation fluidique. L'obturateur est monté mobile entre deux positions extrêmes et est entraîné entre les deux positions extrêmes par un moteur d'entraînement via l'organe d'entraînement. En particulier, l'organe d'entraînement convertit le mouvement de rotation du moteur d'entraînement en mouvement de translation de l'arbre de commande de l'obturateur. La vanne de circulation de fluide comprend également un système de réduction, comprenant par exemple des engrenages, disposé au niveau de l'arbre de transmission du moteur d'entraînement. Lorsque l'obturateur atteint l'une de ses deux positions extrêmes, encore appelées butées, l'arrêt brusque qui résulte crée un choc sur les dentures des engrenages. Ces chocs peuvent accélérer l'usure des dentures voire les endommager.

Il est possible de dimensionner les dentures de sorte à résister aux chocs générés lors de l'ouverture de la vanne. Néanmoins, un tel surdimensionnement des dentures augmente l'encombrement et est pénalisant.

La présente invention vise à remédier à ces inconvénients en proposant un actionneur, destiné à être intégré dans une vanne pour un moteur de véhicule automobile, permettant de d'amortir les chocs générés lors de la pleine ouverture de la vanne, tout en étant facilement intégrable au sein de la vanne.

A cet effet, l'invention a pour objet un actionneur, destiné à être intégré dans une vanne pour un moteur de véhicule automobile, comprenant :
- un secteur denté mobile en rotation autour d'un axe de rotation,
- une tige centrée sur l'axe de rotation mobile en translation selon l'axe de rotation, et
- un moyen d'amortissement comprenant au moins une paire de butées, au moins une butée étant solidaire du secteur denté et au moins une butée étant solidaire de la tige,
et dans lequel au moins une butée de la paire de butées est conformée pour absorber les mouvements relatifs entre le secteur denté et la tige,
- et la au moins une butée solidaire du secteur denté s'étendant depuis le secteur denté selon l'axe de rotation et présentant un profil s'amincissant depuis le secteur denté le long de l'axe de rotation, et
- les butées étant configurées pour entrer en contact simultanément lorsque un obturateur atteint une position d'ouverture de la vanne.

Un actionneur selon l'invention permet un amortissement des chocs générés lors de l'ouverture maximale de la vanne dans laquelle l'actionneur est intégré. En effet, le moyen d'amortissement de l'actionneur est conformé pour absorber une partie des chocs générés lors de l'ouverture maximale de la vanne, et permet donc de réduire les contraintes mécaniques appliquées sur les dentures du secteur denté lors de ces chocs. Le couple appliqué sur les dentures du secteur denté lors d'un choc est ainsi limité.

De façon avantageuse, un actionneur selon l'invention permet d'éviter un surdimensionnement du secteur denté au sein de l'actionneur, et ainsi une réduction des dimensions de la vanne de circulation de fluide dans laquelle l'actionneur est intégré par rapport aux vannes de circulation de fluide selon l'art antérieur.

L'actionneur selon l'invention peut également comprendre une ou plusieurs des caractéristiques ci-dessous, considérées individuellement ou selon toutes les combinaisons techniquement possibles :
- le secteur denté et la au moins une butée solidaire du secteur denté forment un ensemble monobloc ; et/ou
- la au moins une butée solidaire du secteur denté est fixée sur le secteur denté ; et/ou
- la au moins une butée solidaire du secteur denté est de forme sensiblement cylindrique ; et/ou
- la au moins une butée solidaire de la tige est fixée à la tige ; et/ou
- la tige comprend la au moins une butée solidaire de la tige ; et/ou
- la au moins une butée solidaire de la tige s'étend depuis la tige selon une direction orthogonale à l'axe de rotation et présente un profil s'amincissant depuis la tige dans une direction orthogonale à l'axe de rotation ; et/ou
- la au moins une butée solidaire de la tige s'étend depuis la tige selon une direction orthogonale à l'axe de rotation et présente un profil s'amincissant depuis la tige dans une direction parallèle à l'axe de rotation en direction du secteur denté ; et/ou
- la au moins une butée solidaire de la tige est de forme sensiblement cylindrique, notamment à base rectangulaire ; et/ou
- la au moins une butée solidaire de la tige comprend au moins une surface de contact s'étendant depuis la butée dans une direction parallèle à l'axe de rotation ; et/ou
- la au moins une butée solidaire de la tige comprend au moins une surface de contact s'étendant depuis la butée dans une direction orthogonale à l'axe de rotation, la surface de contact étant plane ; et/ou
- l'actionneur comprend un dispositif anti-rotation comprenant une pièce de réception comprenant une gorge de réception, et un moyen anti-rotation monté dans la gorge de réception et solidaire de la tige, le moyen anti-rotation et la gorge de réception étant conformés de sorte que la tige soit bloquée en rotation autour de l'axe par rapport à la pièce de réception et mobile en translation selon l'axe par rapport à la pièce de réception, et dans lequel le moyen anti-rotation comprend au moins une butée de la paire de butées solidaire de la tige ; et/ou
- le dispositif anti-rotation comprend une cible magnétique agencée sur le moyen anti-rotation, la cible magnétique et le moyen anti-rotation étant au moins partiellement surmoulés,
- le moyen anti-rotation est surmoulé sur la tige ; et/ou
- le moyen anti-rotation comprend un insert, le moyen anti-rotation étant fixé à la tige via l'insert ; et/ou
- l'insert du moyen anti-rotation est soudé sur la tige, la soudure étant réalisée sur 360° autour de l'axe de translation ; et/ou
- l'insert du moyen anti-rotation est soudé sur la tige, la soudure étant réalisée sur des portions de l'insert s'étendant sur un secteur angulaire prédéterminé autour de l'axe de translation ; et/ou
- la soudure est réalisée entre une extrémité de la tige et une portion d'une surface axiale de l'insert ; et/ou
- le dispositif anti-rotation comprend deux moyens anti-rotation, chaque moyen anti-rotation étant monté dans la gorge de réception et solidaire de la tige, chaque moyen anti-rotation et la gorge de réception étant conformés de sorte que la tige soit bloquée en rotation autour de l'axe par rapport à la pièce de réception et mobile en translation selon l'axe par rapport à la pièce de réception ; et/ou
- les moyens anti-rotation sont agencés de façon symétrique par rapport à l'axe de translation ; et/ou
- le ou chaque moyen anti-rotation comprend au moins un patin s'étendant longitudinalement selon l'axe de translation en direction de la gorge de réception de sorte que le moyen anti-rotation est monté glissant dans la gorge de réception ; et/ou
- le au moins un ou chaque patin présente une forme cylindrique, notamment à base en forme d'arc de cercle ; et/ou
- l'arc de cercle s'étend sur un secteur angulaire compris entre 100° et 160° ; et/ou
- le moyen anti-rotation a une forme générale parallélépipédique et comprend deux patins agencés sur des faces opposées de la forme générale parallélépipédique du moyen anti-rotation, chaque patin s'étendant longitudinalement selon l'axe de translation en direction de la gorge de réception de sorte que le moyen anti-rotation est monté glissant dans la gorge de réception ; et/ou
- les patins sont agencés de façon symétrique par rapport à un axe orthogonal à l'axe de translation ; et/ou
- les patins sont agencés de façon symétrique par rapport à un plan comprenant l'axe de translation ; et/ou
- le surmoulage est réalisé en matériau plastique ; et/ou
- le surmoulage est réalisé en matériau plastique et magnétique ; et/ou
- le surmoulage est réalisé en matériau polymère chargé en particules magnétiques ; et/ou
- la cible magnétique comprend un aimant permanent ; et/ou
- la cible magnétique s'étend depuis le moyen anti-rotation dans un plan parallèle à l'axe de translation ; et/ou
- la pièce de réception est réalisée en matériau plastique ou métallique ; et/ou
- le moyen anti-rotation est réalisé en matériau plastique ou métallique ; et/ou
- la au moins une butée solidaire du secteur denté est conformée pour absorber les mouvements relatifs entre le secteur denté et la tige ; et/ou
- la au moins une butée solidaire de la tige est conformée pour absorber les mouvements relatifs entre le secteur denté et la tige ; et/ou
- chaque butée d'une paire de butées est conformée pour absorber les mouvements relatifs entre le secteur denté et la tige ; et/ou
- le moyen d'amortissement comprend une pluralité de paires de butées, une butée de chaque paire de butées étant solidaire du secteur denté et une butée de chaque paire de butées étant solidaire de la tige ; et/ou
- le moyen d'amortissement comprend une première et une deuxième paire de butées, une butée de chaque paire de butées étant solidaire du secteur denté et une butée de chaque paire de butées étant solidaire de la tige ; et/ou
- la raideur de la butée d'une paire de butées solidaire du secteur denté est inférieure à la raideur de la butée de la paire de butées solidaire de la tige ; et/ou
- les raideurs des butées d'une paire de butées sont égales ; et/ou
- la raideur de la butée d'une paire de butées solidaire du secteur denté est supérieure à la raideur de la butée de la paire de butées solidaire de la tige ; et/ou
- chaque butée solidaire du secteur denté est conformée pour absorber les mouvements relatifs entre le secteur denté et la tige ; et/ou
- les butées solidaires du secteur denté sont symétriques par rapport à l'axe de rotation ; et/ou
- chaque butée solidaire de la tige est conformée pour absorber les mouvements relatifs entre le secteur denté et la tige ; et/ou
- la au moins une butée de la première paire de butées solidaire du secteur denté est conformée pour absorber les mouvements relatifs entre le secteur denté et la tige, et la au moins une butée de la deuxième paire de butées solidaire de la tige est conformée pour absorber les mouvements relatifs entre le secteur denté et la tige ; et/ou
- les première et deuxième paires de butées sont agencées de façon symétrique par rapport à l'axe de rotation ; et/ou
- le secteur denté est une couronne dentée ; et/ou
- le secteur denté comprend des dentures droites ; et/ou
- le secteur denté comprend des dentures coniques ; et/ou
- la tige est réalisée en matériau plastique ou métallique ; et/ou
- le secteur denté est réalisé en matériau plastique ; et/ou
- le moyen d'amortissement est réalisé en matériau plastique.

L'invention concerne également une vanne de circulation de fluide comprenant :
- un corps de vanne délimitant un conduit de circulation de fluide,
- un obturateur mobile en translation entre une première position extrême, dite position d'ouverture, permettant le passage du fluide dans le conduit et une deuxième position extrême, dite position de fermeture, empêchant le passage du fluide dans le conduit, et
- un actionneur selon l'invention, dans lequel l'obturateur est lié à la tige de l'actionneur.

Avantageusement, une vanne de circulation de fluide selon l'invention permet de limiter les chocs générés lors de l'ouverture de la vanne. Le couple appliqué sur les dentures du secteur denté de l'actionneur lors d'un choc est ainsi limité.

De façon avantageuse, une vanne de circulation de fluide selon l'invention présente des dimensions réduites par rapport aux vannes de circulation de fluide selon l'art antérieur.

De plus, une telle vanne de circulation de fluide permet une prise en compte de l'usure des pièces de l'actionneur.

La vanne circulation de fluide selon l'invention peut également comprendre une ou plusieurs des caractéristiques ci-dessous, considérées individuellement ou selon toutes les combinaisons techniquement possibles :
- le moyen d'amortissement de l'actionneur comprend une pluralité de paires de butées, les butées de chaque paire de butées étant configurées pour entrer en contact simultanément lorsque l'obturateur atteint la position d'ouverture de la vanne ; et/ou
- chaque butée d'une paire de butées comprend une portion plane, les portions planes de chaque butée d'une paire de butées étant configurées pour être en contact lorsque l'obturateur atteint la position d'ouverture de la vanne ; et/ou
- le moyen d'amortissement de l'actionneur comprend une première et une deuxième paire de butées, la raideur de la première paire de butées est différente de la raideur de la deuxième paire de butées ; et/ou
- les butées d'une paire de butées sont configurées pour présenter une zone de recouvrement supérieure ou égale à 0,5 mm dans la direction de l'axe de rotation lorsque l'obturateur atteint la position d'ouverture de la vanne ; et/ou
- l'obturateur est une soupape ; et/ou
- la vanne comprend un moteur électrique comprenant un arbre de transmission ayant un mouvement de rotation autour d'un axe orthogonal à l'axe de translation ; et/ou
- le moteur électrique est du type à courant continu ; et/ou
- le moteur électrique est du type sans balai ; et/ou
- le moteur électrique est un moteur pas à pas ; et/ou
- la vanne comprend également un organe d'entraînement configuré pour transformer le mouvement de rotation de l'arbre de transmission du moteur électrique en un mouvement de translation de l'obturateur ; et/ou
- le dispositif anti-rotation est aligné sur l'axe de rotation du moteur électrique lorsque l'obturateur atteint la position d'ouverture de la vanne ; et/ou
- la vanne comprend un capot de protection ; et/ou
- le capot de protection comprend un capteur configuré pour interagir avec la cible magnétique ; et/ou
- le capteur est une sonde à effet Hall ; et/ou
- le capteur est une sonde à effet magnéto-résistif ; et/ou
- le capteur est agencé sur l'axe de translation ; et/ou
- le capteur est agencé dans un plan parallèle à l'axe de translation ; et/ou
- le capteur est agencé de sorte que la tige, le moyen anti-rotation et le capteur sont alignés dans cet ordre à partir de l'axe de translation ; et/ou
- la tige est une vis à billes ; et/ou
- la vanne est une vanne est du type vanne de recirculation des gaz d'échappement, notamment du type haute pression.

D'autres caractéristiques et avantages de la présente invention apparaitront à la lecture de la description et des figures suivantes :
- la figure 1 est une vue en coupe d'une vanne de régulation de débit d'un gaz selon l'invention,
- les figures 2 et 3 sont des vues en perspective d'un actionneur selon l'invention,
- les figures 4 et 5 sont des vue respectivement de dessus et en perspective d'un secteur denté de l'actionneur selon un mode de réalisation de l'invention
- les figures 6 et 7 représentent une paire de butées d'un moyen d'amortissement d'un actionneur selon l'invention,
- les figures 8 et 9 sont des vues en perspective d'une partie d'un actionneur selon un mode de réalisation de l'invention,
- la figure 10 est une vue de dessus d'un dispositif anti-rotation d'un actionneur selon l'invention, et
- les figures 11 et 12 sont des vues en coupe d'une partie de la vanne de régulation de débit d'un gaz selon des modes de réalisation de l'invention.

Il est à noter que ces dessins n'ont d'autre but que d'illustrer le texte de la description et ne constituent en aucune sorte une limitation de la portée de l'invention.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

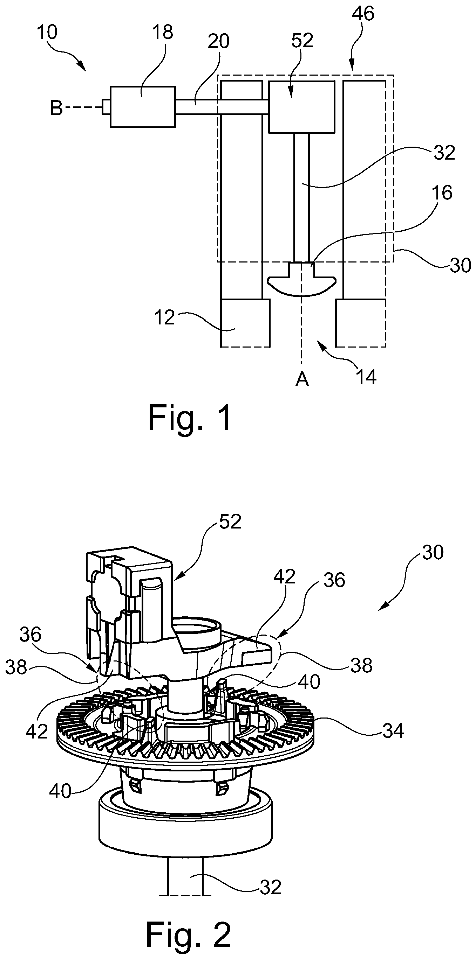

L'invention a pour objet une vanne de circulation de fluide pour un véhicule automobile. La figure 1 illustre une telle vanne 10 de régulation de circulation de fluide configurée pour régler le débit de gaz d'échappement recirculés à l'admission d'un moteur.

La vanne de recirculation des gaz d'échappement peut être du type « haute pression », c'est-à-dire que les gaz d'échappement sont recirculés entre un point du circuit d'échappement situé en amont de la turbine d'un turbocompresseur, et un point du circuit d'admission du moteur situé en aval du compresseur.

La vanne 10 comprend un corps de vanne 12 délimitant un conduit 14 de circulation du gaz. Le conduit s'étend selon un axe longitudinal noté A.

Le corps de vanne 12 peut être réalisé en matériau métallique, par exemple en acier. De préférence, le corps de vanne 12 est réalisé en aluminium ou en alliage d'aluminium.

La vanne 10 comprend un obturateur 16, ici une soupape, mobile en translation entre deux positions extrêmes. Une des positions extrêmes de l'obturateur correspond à une position, dite position d'ouverture, dans laquelle le conduit 14 de la vanne 10 est totalement ouvert et permet de laisser passer les gaz d'échappement, et l'autre position extrême de l'obturateur correspond à une position, dire position de fermeture, dans laquelle le conduit 14 de la vanne 10 est totalement fermé bloquant ainsi le passage des gaz. Autrement dit, l'obturateur 16 est mobile entre une position d'ouverture de la vanne permettant le passage du gaz dans le conduit 14 et une position de fermeture de la vanne empêchant le passage du gaz dans le conduit 14.

L'obturateur 16 est entraîné entre les deux positions par un moteur d'entraînement 18.

Le moteur d'entraînement 18 est par exemple un moteur électrique de type à courant continu. Le moteur électrique peut aussi être du type sans balai, ou un moteur du type pas à pas. Le moteur électrique comprend un arbre de transmission 20 ayant un mouvement de rotation autour d'un axe de rotation noté B sur la figure 1, l'axe B étant sensiblement orthogonal à l'axe A.

La vanne 10 comprend un actionneur 30 comprenant un organe d'entraînement de l'obturateur, par exemple une tige 32. Plus précisément, la tige 32 est liée à l'obturateur 16.

La tige 32 s'étend au moins partiellement dans le conduit 14 selon l'axe longitudinal A. En particulier, la tige 32 est centrée sur l'axe A. La tige 32 est mobile en translation selon l'axe A, dit axe de translation A de la tige 32. La tige 32 peut être une vis à billes. La tige 32 peut être réalisée en matériau plastique. De préférence, la tige 32 est réalisée en matériau métallique.

Dans le cas d'une vanne à soupape telle que représentée sur la figure 1, la tige 32 est mise en mouvement de translation, entraînant l'obturateur 16, par le moteur électrique via un organe d'entraînement.

L'organe d'entraînement (non représenté) est configuré pour transformer le mouvement de rotation de l'arbre de transmission 20 du moteur électrique en un mouvement de translation de l'obturateur 16.

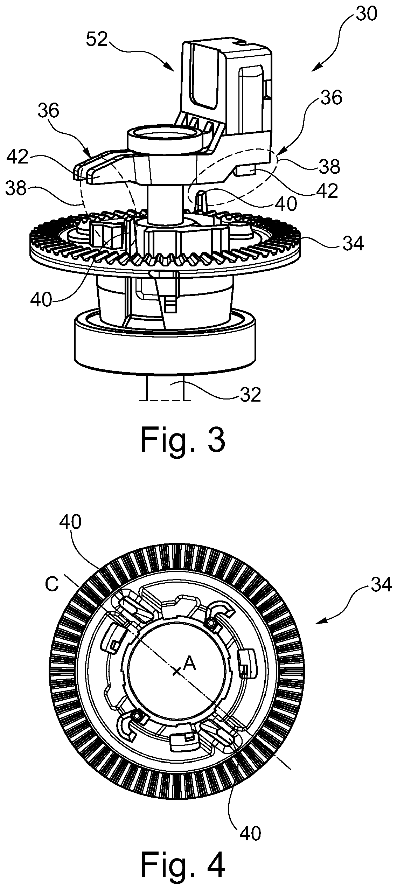

Les figures 2 et 3 illustrent un actionneur 30 selon un mode de réalisation de l'invention.

L'actionneur 30 de la vanne 10 comprend également un secteur denté 34 mobile en rotation autour de l'axe A, dit axe de rotation A du secteur denté 34. Le secteur denté 34 peut être une couronne dentée à dentures droites ou coniques. Par exemple, sur les figures 2 à 5, le secteur denté 34 est une couronne dentée. La couronne dentée peut comprendre une cavité centrée sur l'axe de rotation A, par exemple de forme sensiblement cylindrique, notamment à base circulaire, comme visible sur la figure 4. La cavité de la couronne dentée peut former un orifice traversant centré sur l'axe de rotation A. Le secteur denté 34 peut être réalisé en matériau métallique. De préférence, le secteur denté 34 est réalisé en matériau plastique.

L'actionneur 30 de la vanne 10 peut également comprendre un moyeu (non représenté). Le moyeu est configuré pour être entraîné en rotation par le secteur denté 34. En particulier, le moyeu peut être agencé dans la cavité de la couronne dentée. Le moyeu peut être réalisé en matériau plastique ou en matériau métallique, par exemple en acier.

L'actionneur 30 de la vanne 10 comprend également un moyen d'amortissement 36. Le moyen d'amortissement 36 peut être réalisé en matériau plastique.

Le moyen d'amortissement 36 comprend une ou une pluralité de paires de butées 38. Par exemple sur les figures 2 et 3, le moyen d'amortissement 36 comprend deux paires de butées 38. De façon avantageuse, le moyen d'amortissement 36 comprenant deux paires de butées 38 permet d'éviter un couple radial sur le secteur denté 34 et la tige 32, et ainsi d'éviter la dégradation de la tige 32 et du secteur denté 34.

Selon un mode de réalisation non représenté, les deux paires de butées peuvent être agencées de façon symétrique par rapport à l'axe de rotation A.

Comme représenté sur les figures 2 et 3, une butée 40 de chaque paire de butées 38 est solidaire du secteur denté 34, et une butée 42 de chaque paire de butées 38 est solidaire de la tige 32.

Au moins une butée 40, 42 de la paire de butées 38 est conformée pour absorber les mouvements relatifs entre le secteur denté 34 et la tige 32. Par exemple, la butée 40 solidaire du secteur denté 34 peut être conformée pour absorber les mouvements relatifs entre le secteur denté 34 et la tige 32. La butée 42 solidaire de la tige 32 peut, par exemple, être conformée pour absorber les mouvements relatifs entre le secteur denté 34 et la tige 32. De préférence, chaque butées 40, 42 d'une paire de butées 38 est conformée pour absorber les mouvements relatifs entre le secteur denté 34 et la tige 32.

Selon un mode de réalisation, lorsque le moyen d'amortissement 36 comprend une pluralité de paires de butées 38, chaque butée 40 solidaire du secteur denté 34 de chaque paires de butées 38 est conformée pour absorber les mouvements relatifs entre le secteur denté 34 et la tige 32.

Selon un autre mode de réalisation, lorsque le moyen d'amortissement 36 comprend une pluralité de paires de butées 38, chaque butée 42 solidaire de la tige 32 de chaque paires de butées 38 est conformée pour absorber les mouvements relatifs entre le secteur denté 34 et la tige 32.

Selon un autre mode de réalisation, lorsque le moyen d'amortissement 36 comprend deux paires de butées 38, la butée 40 solidaire du secteur denté 34 d'une paire de butées 38 peut être conformée pour absorber les mouvements relatifs entre le secteur denté 34 et la tige 32, et la butée 42 solidaire de la tige 32 de l'autre paire de butées 38 peut être conformée pour absorber les mouvements relatifs entre le secteur denté 34 et la tige 32.

Selon l'invention, les butées 40, 42 d'une paire de butées 38 sont configurées pour entrer en contact lorsque l'obturateur atteint la position d'ouverture maximale de la vanne.

Un actionneur selon l'invention permet un amortissement des chocs générés lors de l'ouverture maximale de la vanne. En effet, le moyen d'amortissement est conformé pour absorber une partie des chocs générés lors de l'ouverture maximale de la vanne, et permet donc de réduire les contraintes mécaniques appliquées sur les dentures du secteur denté lors de ces chocs.

En particulier, au moins une butée 40, 42 d'une paire de butées 38 est dimensionnée pour se déformer à partir d'un couple prédéterminé. De préférence, chaque butée 40, 42 d'une paire de butées 38 est dimensionnée pour se déformer à partir d'un couple prédéterminé.

Plus précisément, lorsque l'obturateur atteint la position d'ouverture maximale de la vanne, au moins une butée 40, 42 de la paire de butées 38 est conformée pour absorber le couple généré entre le secteur denté 34 et la tige 32. Au moins une butée 40, 42 de la paire de butées 38 est conformée pour absorber le couple généré entre le secteur denté 34 et la tige 32 en se déformant élastiquement sous l'effet du couple généré.

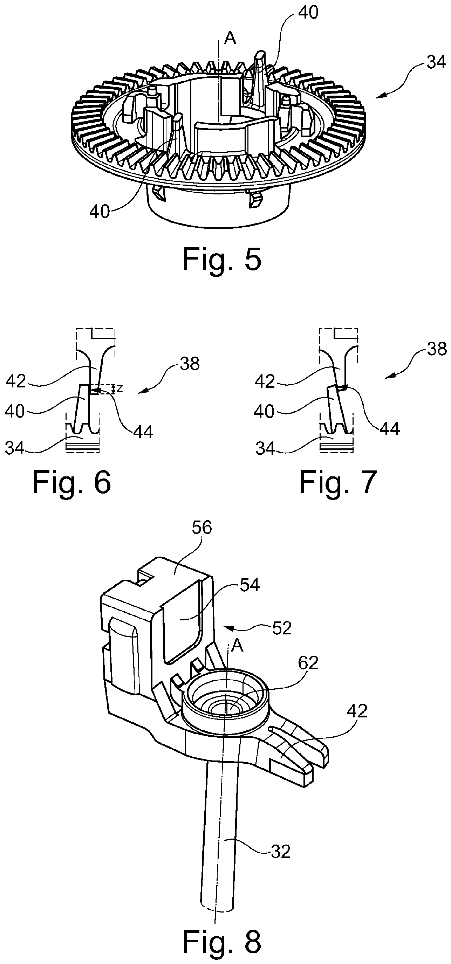

Par exemple, la figure 6 représente une paire de butées 38 sans déformation. Lorsque le couple généré entre le secteur denté 34 et la tige 32 est inférieur ou égal à un couple prédéterminé. La figure 7 représente une paire de butées 38 déformées par le couple généré entre le secteur denté 34 et la tige 32 lorsque la vanne atteint la position de pleine ouverture. Sur la figure 7, la butée 40 solidaire du secteur denté 34 et la butée 42 solidaire de la tige 32 sont déformées de sorte à absorber le sur-couple.

En particulier, lorsque le moyen d'amortissement 36 comprend une pluralité de paires de butées 38, les butées 40, 42 de chaque paire de butées 38 peuvent être configurées pour entrer en contact simultanément lorsque l'obturateur atteint la position d'ouverture de la vanne.

L'élasticité introduite dans la chaine cinématique de commande permet ainsi de limiter le couple appliqué sur les dentures du secteur denté en cas de choc en ouverture sur l'obturateur 16, ce qui limite l'usure et le risque d'endommagement des dentures du secteur denté. La fiabilité de la vanne 10 est améliorée.

Selon un mode de réalisation de l'invention, la raideur de la butée 40 solidaire du secteur denté 34 peut être inférieure à la raideur de la butée 42 solidaire de la tige 32. Alternativement, la raideur de la butée 40 solidaire du secteur denté 34 peut être supérieure à la raideur de la butée 42 solidaire de la tige 32. Bien entendu, les raideurs des butées 40, 42 d'une paire de butées 48 peuvent être égales.

Selon un mode de réalisation de l'invention, la raideur d'une paire de butées 38 est différente de la raideur d'une autre paire de butées 38. Alternativement, les raideurs des paires de butées 38 sont égales.

Les figures 4 et 5 représentent un secteur denté 34 d'un actionneur 30 selon l'invention.

Selon un mode de réalisation préféré de l'invention, le secteur denté 34 et la butée 40 solidaire du secteur denté, ici deux butées 40 sont représentées sur les figures 4 et 5, forment un ensemble monobloc. Autrement dit, on entend par le terme « solidaire du secteur denté » que le secteur denté 34 comprend la butée 40. Le secteur denté 34 et la butée 40 peuvent être obtenus par moulage. Autrement dit, la butée 40 est formée lors du moulage du secteur denté 34.

Selon un autre mode de réalisation de l'invention, la butée 40 solidaire du secteur denté 34 est fixée sur le secteur denté 34. Autrement dit, on entend par le terme « solidaire du secteur denté » que la butée 40 est liée au secteur denté 34 de sorte que l'ensemble composé par le secteur denté 34 et la butée 40 forment une pièce après fixation de la butée sur le secteur denté. La butée 40 peut être fixée par collage sur le secteur denté 34, ou peut être surmoulée sur le secteur denté 34. Le secteur denté 34 et la butée 40 peuvent être réalisés dans un même matériau, par exemple en matériau plastique, ou dans un matériau différent l'un de l'autre, par exemple le secteur denté 34 en matériau métallique et la butée 40 en matériau plastique.

Une butée 40 solidaire du secteur denté 34 peut s'étendre depuis le secteur denté 34 selon l'axe de rotation A, comme visible sur la figure 5. Une butée 40 solidaire du secteur denté 34 peut être de forme sensiblement cylindrique. Une butée 40 solidaire du secteur denté 34 peut s'étendre depuis le secteur denté 34 le long de l'axe de rotation A sur une distance comprise entre 1 mm et 4 mm, par exemple sur 2,5 mm.

Selon l'invention, une butée 40 solidaire du secteur denté 34 présente un profil s'amincissant depuis le secteur denté 34 le long de l'axe de rotation A. Le profil s'amincissant de la butée 40 est notamment visible sur la figure 4.

Une butée 40 présentant un profil s'amincissant permet de façon avantageuse de procurer une souplesse à la butée 40, et ainsi d'améliorer l'amortissement des chocs générés lors de l'ouverture de la vanne. En outre, une butée 40 présentant un profil s'amincissant permet de faciliter le démoulage du secteur denté, et donc de faciliter le procédé de fabrication de l'actionneur 30.

Une butée 40 solidaire du secteur denté 34 d'une paire de butées 38 peut comprendre une surface plane destinée à entrer en contact avec la butée 42 solidaire de la tige 32 de la paire de butées 38 lorsque l'obturateur atteint la position d'ouverture de la vanne, comme représenté sur les figures 6 et 7.

Les butées 40 solidaires du secteur denté 34 peuvent être réparties sur le secteur denté 34 avec un écart angulaire sensiblement constant autour de l'axe de rotation A. De préférence, les butées 40 sont agencées de façon symétrique par rapport à l'axe de rotation A. Comme représenté sur la figure 4, les butées 40 sont agencées de façon symétrique par rapport à un plan comprenant l'axe de rotation A et un axe orthogonal à l'axe A, noté C sur la figure 4.

Avantageusement, les butées 40 sont réparties avec un écart angulaire constant sur le secteur denté 34, ce qui permet d'avoir une composée des efforts de réaction nulle.

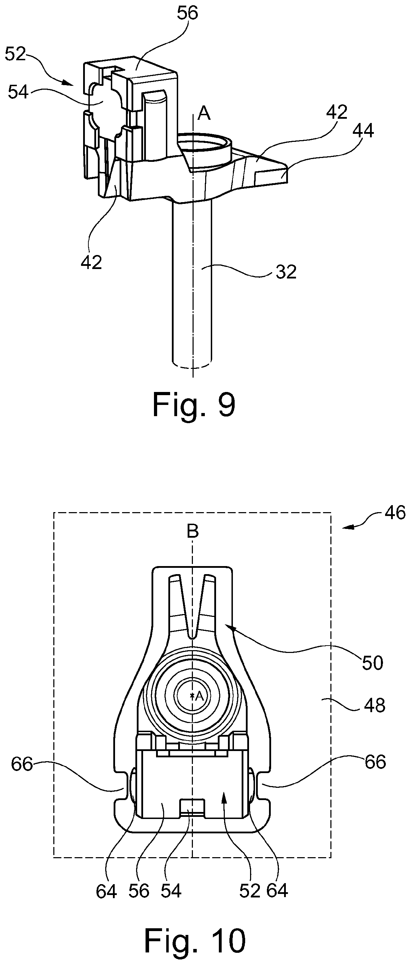

Les figures 8 et 9 représentent une tige 32 et une partie du moyen d'amortissement 36 d'un actionneur 30 selon l'invention.

Selon un mode de réalisation préféré de l'invention, la butée 42 solidaire de la tige 32, ici deux butées 42 sont représentées sur la figure 9, est fixée à la tige 32. Autrement dit, on entend par le terme « solidaire de la tige » que la butée 42 est liée à la tige 32 de sorte que l'ensemble composé par la tige 32 et la butée 42 forment une pièce après fixation de la butée sur la tige 32. La butée 42 peut être fixée par collage, vissage ou soudure sur la tige 32, ou peut être surmoulée sur la tige 32. La tige 32 et la butée 42 peuvent être réalisées dans un même matériau, par exemple en matériau plastique, ou dans un matériau différent l'un de l'autre, par exemple la tige 32 en matériau métallique et la butée 42 en matériau plastique.

Selon un autre mode de réalisation de l'invention, la tige 32 comprend la butée 42. Autrement dit, par « solidaire de la tige », on entend que la tige 32 et la butée 42 peuvent former un ensemble monobloc. La tige 32 et la butée 42 peuvent être obtenues par moulage. Autrement dit, la butée 42 est formée lors du moulage de la tige 32.

Une butée 42 solidaire de la tige 32 peut s'étendre depuis la tige 32 selon une direction orthogonale à l'axe de rotation A, comme visible sur les figures 8 et 9. Une butée 42 solidaire de la tige 32 peut être de forme sensiblement cylindrique, notamment à base rectangulaire.

En particulier, une butée 42 solidaire de la tige 32 peut présenter un profil s'amincissant depuis la tige 32 dans une direction orthogonale à l'axe de rotation A. Le profil s'amincissant dans une direction orthogonale à l'axe de rotation A de la butée 42 est notamment visible sur la figure 8.

Une butée 42 solidaire de la tige 32 peut présenter un profil s'amincissant depuis la tige 32 dans une direction parallèle à l'axe de rotation A en direction du secteur denté 34 lorsque l'actionneur 30 est assemblé. Le profil s'amincissant dans une direction parallèle à l'axe de rotation A de la butée 42 est notamment visible sur la figure 9.

Une butée 42 présentant un profil s'amincissant permet de façon avantageuse de procurer une souplesse à la butée 42, et ainsi d'améliorer l'amortissement des chocs générés lors de l'ouverture de la vanne. En outre, une butée 42 présentant un profil s'amincissant permet de faciliter le démoulage de la tige 32 ou du moyen d'amortissement 36, et donc de faciliter le procédé de fabrication de l'actionneur 30.

Les butées 42 solidaire de la tige 32 peuvent être réparties avec un écart angulaire sensiblement constant autour de l'axe de translation A de la tige 32, de sorte à avoir une composée des efforts de réaction nulle.

Une butée 42 solidaire de la tige 32 peut comprendre une ou une pluralité de surfaces de contact 44 s'étendant depuis la butée 42 dans une direction parallèle à l'axe de rotation A. Par exemple, sur les figures 8 et 9, une butée 42 comprend une surface de contact 44. Une surface de contact 44 peut s'étendre depuis la butée 42 dans une direction orthogonale à l'axe de rotation A.

Avantageusement, la surface de contact 44 de la butée 42 absorbe les chocs générés lors de l'ouverture de la vanne.

En particulier, une surface de contact 44 peut être plane, comme représenté sur les figures 6 et 7.

La surface de contact 44 d'une butée 42 solidaire de la tige 32 d'une paire de butées 38 est destinée à entrer en contact avec la butée 40 solidaire du secteur denté 34 de la paire de butées 38 lorsque l'obturateur atteint la position d'ouverture de la vanne, comme représenté sur les figures 6 et 7.

De préférence, chaque butée 40, 42 d'une paire de butées comprend une portion plane de sorte que les portions planes de chaque butée 40, 42 d'une paire de butées 38 entrent en contact lorsque l'obturateur atteint la position d'ouverture de la vanne.

Les butées 40, 42 d'une paire de butées 38 peuvent être configurées pour présenter une zone de recouvrement Z supérieure ou égale à 0,5 mm dans la direction de l'axe de rotation A lorsque l'obturateur atteint la position d'ouverture de la vanne. Autrement dit, comme représenté sur la figure 6, la zone de recouvrement Z s'étendant le long de l'axe de rotation A est supérieure ou égale à 0,5 mm. De préférence, les butées 40, 42 d'une paire de butées 38 sont configurées pour présenter une zone de recouvrement Z supérieure ou égale à 1 mm dans la direction de l'axe de rotation A lorsque l'obturateur atteint la position d'ouverture de la vanne.

L'actionneur 30 peut également comprendre un dispositif anti-rotation 46, notamment représenté sur la figure 10.

Le dispositif anti-rotation 46 comprend une pièce de réception 48 comprenant une gorge de réception 50. La pièce de réception 48 peut être réalisée en matériau plastique ou métallique.

Le dispositif anti-rotation 34 comprend également un moyen anti-rotation 52 monté dans la gorge de réception 50 et solidaire de la tige 32. Le moyen anti-rotation 52 peut être réalisé en matériau plastique ou métallique. Le moyen anti-rotation 52 peut avoir une forme générale parallélépipédique.

Le moyen anti-rotation 52 et la gorge de réception 50 sont conformés de sorte que la tige 32 est bloquée en rotation autour de l'axe A par rapport à la pièce de réception 48 et mobile en translation selon l'axe A par rapport à la pièce de réception 48. Plus précisément, la forme et les dimensions du moyen anti-rotation 52 sont adaptées à la forme et aux dimensions de la gorge de réception 50 de sorte à bloquer la rotation de la tige 32 autour de l'axe A par rapport à la pièce de réception 48 et permettre la translation de la tige 32 selon l'axe A par rapport à la pièce de réception 48.

Avantageusement, le dispositif anti-rotation 46 permet de guider la translation de la tige 32 par rapport à la pièce de réception 48, tout en réduisant les contraintes mécaniques au sein de l'actionneur 30. En outre, dans l'actionneur 30 selon l'invention, le jeu axial présent au niveau de la tige 32 est maîtrisé.

En particulier, le moyen anti-rotation 52 peut comprendre une butée 42 d'une paire de butées 48 solidaire de la tige 32. Par exemple, sur les figures 2, 3 et 8 à 10, le moyen anti-rotation 52 comprend les deux butées 42 solidaire de la tige 32 des deux paires de butées 38.

Le dispositif anti-rotation 52 peut également comprendre une cible magnétique 54, notamment visible sur les figures 8 et 9, agencée sur le moyen anti-rotation 52. La cible magnétique 54 peut comprendre un aimant permanent. La cible magnétique peut être de forme sensiblement cylindrique, notamment à base rectangulaire, telle que visible sur les figures 8 à 10. En particulier, la cible magnétique 54 peut s'étendre depuis le moyen anti-rotation 52 dans un plan parallèle à l'axe de translation A.

La cible magnétique 54 et le moyen anti-rotation 52 peuvent être au moins partiellement surmoulés. Par exemple, le surmoulage 56 partiel de la cible magnétique 54 et du moyen anti-rotation 52 est visible sur les figures 8 à 10.

Le surmoulage 56 peut être réalisé en matériau plastique, ou en mélange de matériaux plastique et magnétique, par exemple en plasto-aimant. Le surmoulage 56 peut également être réalisé en matériau polymère chargé en particules magnétiques.

Avantageusement, le surmoulage 56 de la cible magnétique 54 et du moyen anti-rotation 52 permet d'assurer la fonction anti-rotation du dispositif anti-rotation 46, et ainsi de garantir un mouvement de translation pur de la tige 32. En effet, le surmoulage 56 de la cible magnétique 54 et du moyen anti-rotation 52 est conformé avec la gorge de réception 50 de sorte que la tige 32 est bloquée en rotation autour de l'axe A par rapport à la pièce de réception 48 et mobile en translation selon l'axe A par rapport à la pièce de réception 48.

De plus, le regroupement de la fonction anti-rotation et de la mesure de la position de la tige 32, notamment grâce au surmoulage 56 de la cible magnétique 54 et du moyen anti-rotation 52, permet de réduire les coûts de production de l'actionneur 30, et donc de la vanne 10 dans laquelle il est intégré. En outre, le surmoulage 56 de la cible magnétique 54 et du moyen anti-rotation 52 permet de simplifier le procédé de fabrication de l'actionneur 30, puisque deux fonctions sont intégrées dans une même pièce.

Le surmoulage 56 partiel de la cible magnétique 54 et du moyen anti-rotation 52 permet d'éviter des contraintes au niveau de la cible magnétique 54, et ainsi d'éviter une dégradation du surmoulage lors de l'utilisation de la vanne. Ainsi, le surmoulage partiel de la cible magnétique 54 et du moyen anti-rotation 52 permet d'augmenter la durée de vie de la vanne par rapport à un surmoulage complet d'une cible magnétique et d'un moyen anti-rotation.

Le moyen anti-rotation 52 du dispositif anti-rotation 46 peut être aligné sur l'axe de rotation B du moteur électrique lorsque l'obturateur atteint la position d'ouverture de la vanne 10. Par exemple, sur la figure 1, une position d'ouverture de la vanne 10 est représentée et le moyen anti-rotation 52 du dispositif anti-rotation 46 est aligné sur l'arbre de transmission 20 du moteur électrique.

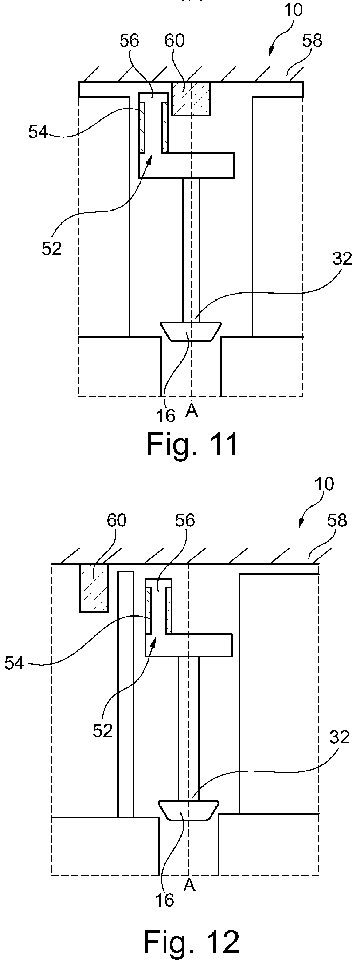

La vanne 10 peut comprendre un capot 58 de protection, notamment représenté sur les figures 11 et 12, configuré pour protéger l'intérieur de la vanne de particules extérieures, telles que de la poussière ou des gouttes d'eau.

Le capot de protection 58 peut comprendre un capteur 60 configuré pour interagir avec la cible magnétique 54. En particulier, le capteur 60 est un capteur de position, notamment un capteur de position linéaire dans le cas d'une vanne à soupape, destiné à détecter la position de l'obturateur 16. Le capteur 60 peut être une sonde à effet Hall ou une sonde à effet magnéto-résistif.

Le capteur 60 peut être agencé sur l'axe de translation A, comme représenté sur la figure 11.

Le capteur 60 peut être agencé dans un plan parallèle à l'axe de translation A, comme représenté sur la figure 12. En particulier, le capteur 60 peut être agencé de sorte que la tige 32, le moyen anti-rotation 52 et le capteur 60 sont alignés dans cet ordre à partir de l'axe de translation A.

Le surmoulage 56 partiel de la cible magnétique 54 et du moyen anti-rotation 52 peut être conformé de sorte qu'une partie de la cible magnétique 54 agencée en regard du capteur 60 soit dépourvue de surmoulage.

Par exemple, comme représenté sur les figures 11 et 12, une partie de la cible magnétique 54 agencée en regard du capteur 60 lorsque l'obturateur 16 est en position d'ouverture de la vanne 10 est dépourvue de surmoulage de sorte que la cible magnétique 54 et le capteur 60 puissent être en contact direct. Par contact direct entre la cible magnétique 54 et le capteur 60 on entend qu'aucun élément extérieur au dispositif anti-rotation 46 ne se situe entre la cible magnétique 54 et le capteur 60. Ainsi, seule la pièce de réception 48 peut se situer entre la cible magnétique 54 et le capteur 60.

Selon un mode de réalisation de l'invention, le moyen anti-rotation 52 est surmoulé sur la tige 32.

Le surmoulage du moyen anti-rotation 52 sur la tige 32 permet avantageusement d'améliorer la précision des mesures du capteur 60. En effet, la cible magnétique 54 et le moyen anti-rotation 52 étant surmoulés ensemble, la cible magnétique 54 permet ainsi une mesure directe de la position de la tige 32, et donc de l'obturateur 16.

Selon un autre mode de réalisation de l'invention, le moyen anti-rotation 52 comprend un insert 62, par exemple un insert métallique. Comme représenté sur la figure 8, le moyen anti-rotation 52 est fixé à la tige 32 via l'insert 62. Plus précisément, l'insert 62 peut être soudé sur la tige 32. Par exemple, la soudure de l'insert 62 sur la tige 32 peut être réalisée sur 360° autour de l'axe de translation A. La soudure de l'insert 62 sur la tige 32 peut être réalisée sur des portions de l'insert 62 s'étendant sur un secteur angulaire prédéterminé autour de l'axe de translation A. Autrement dit, l'insert 62 peut être soudé avec une soudure par points sur la tige 32. En particulier, la soudure peut être réalisée entre une extrémité de la tige 32, l'extrémité de la tige 32 non reliée à l'obturateur 16, et une portion d'une surface axiale de l'insert 62.

La fixation du moyen anti-rotation 52 directement sur la tige 32 permet avantageusement d'améliorer la précision des mesures du capteur 60. En effet, comme la cible magnétique 54 et le moyen anti-rotation 52 sont surmoulés l'un avec l'autre, la cible magnétique 54 permet ainsi une mesure directe de la position de la tige 32, et donc de l'obturateur 16.

Le moyen anti-rotation 52 peut comprendre un ou une pluralité de patins 64, par exemple deux patins 64 comme représentés sur la figure 10. Lorsque le moyen anti-rotation 52 comprend deux patins 64, les patins 64 peuvent être agencés de façon symétrique par rapport à l'axe de translation A. Autrement dit, les deux patins 64 peuvent être agencés sur des faces opposées de la forme générale parallélépipédique du moyen anti-rotation 52. En particulier, les patins 64 peuvent être agencés de façon symétrique par rapport à un axe orthogonal à l'axe de translation A, notamment par rapport à l'axe B, tel que représenté sur la figure 10. Les patins 64 peuvent être agencés de façon symétrique par rapport à un plan comprenant l'axe de translation A, par exemple par rapport à un plan comprenant les axes A et B sur la figure 10.

Un patin 64 s'étend depuis le moyen anti-rotation 52, longitudinalement selon l'axe de translation A et en direction de la gorge de réception 50. En particulier, un patin 64 coopère avec la gorge de réception 50 de sorte que le patin 64, et donc le moyen anti-rotation 52, peut être monté glissant dans la gorge de réception 50.

Un patin 64 peut présenter une forme cylindrique, notamment à base en forme d'arc de cercle, comme visible sur les figures 8 et 9. En particulier, l'arc de cercle peut s'étendre sur un secteur angulaire inférieur à 180°, et notamment compris entre 100° et 160°.

De façon avantageuse, un moyen anti-rotation comprenant deux patins de forme cylindrique agencés symétriquement par rapport à l'axe A permet de maintenir la même distance entre le moyen anti-rotation et l'axe A en cas de désaxage.

La gorge de réception 50 peut comprendre une ou une pluralité d'excroissances 66, par exemple deux excroissances 66 comme représentés sur la figure 10. En particulier, la gorge de réception 50 peut comprendre autant d'excroissances 66 que le moyen anti-rotation 52 comprend de patins 64.

Lorsque la gorge de réception 50 comprend deux excroissances 66, les excroissances 66 peuvent être agencées de façon symétrique par rapport à l'axe de translation A. Autrement dit, les deux excroissances 66 peuvent être agencées sur des faces opposées de la gorge de réception 50. En particulier, les excroissances 66 peuvent être agencées de façon symétrique par rapport à un axe orthogonal à l'axe de translation A, notamment par rapport à l'axe B, tel que représenté sur la figure 10. Les excroissances 66 peuvent être agencées de façon symétrique par rapport à un plan comprenant l'axe de translation A, par exemple par rapport à un plan comprenant les axes A et B sur la figure 10.

Une excroissance 66 peut s'étendre depuis une paroi délimitant la gorge de réception 50, longitudinalement selon l'axe de translation A et en direction du moyen anti-rotation 52.

Une excroissance 66 peut être conformée pour coopérer avec un patin 64 de sorte que le patin 64, et donc le moyen anti-rotation 52, peut être monté glissant sur l'excroissance 66, et donc dans la gorge de réception 50.

Selon un mode de réalisation non représenté, le dispositif anti-rotation peut comprendre deux moyens anti-rotation. Chaque moyen anti-rotation peut comprendre une butée solidaire de la tige d'une paire de butées. Chaque moyen anti-rotation peut être monté dans la gorge de réception et solidaire de la tige. En particulier, chaque moyen anti-rotation et la gorge de réception sont conformés de sorte que la tige soit bloquée en rotation autour de l'axe par rapport à la pièce de réception et mobile en translation selon l'axe par rapport à la pièce de réception. Les moyens anti-rotation peuvent être agencés de façon symétrique par rapport à l'axe de translation A.

De façon avantageuse, un dispositif anti-rotation comprenant deux moyens anti-rotation agencés de façon symétrique par rapport à l'axe A permet d'équilibrer les efforts exercés sur la tige et tendant à faire fléchir la tige.

La vanne de circulation de fluide a été décrite dans le cadre d'une vanne doseuse des gaz d'admission de moteurs. Bien entendu, l'invention n'est nullement limitée aux modes de réalisation décrits et illustrés, qui n'ont été donnés qu'à titre d'exemples. Au contraire, d'autres applications de la vanne de circulation de fluide conforme à l'invention sont également possibles sans sortir du cadre de l'invention.

## Revendications

1. Actionneur (30), destiné à être intégré dans une vanne (10) pour un moteur de véhicule automobile, comprenant :
- un secteur denté (34) mobile en rotation autour d'un axe de rotation (A),
- une tige (32) centrée sur l'axe de rotation (A) et mobile en translation selon l'axe de rotation (A), et
- un moyen d'amortissement (36) comprenant au moins une paire de butées (38), au moins une butée (40) étant solidaire du secteur denté (34) et au moins une butée (42) étant solidaire de la tige (32),
- et dans lequel au moins une butée (40, 42) de la paire de butées (38) est conformée pour absorber les mouvements relatifs entre le secteur denté (34) et la tige (32), les butées étant configurées pour entrer en contact simultanément lorsque un obturateur atteint une position d'ouverture de la vanne (10),
- la au moins une butée (40) solidaire du secteur denté (34) s'étendant depuis le secteur denté (34) selon l'axe de rotation (A) et présentant un profil s'amincissant depuis le secteur denté (34) le long de l'axe de rotation (A).

2. Actionneur (30) selon la revendication précédente, dans lequel le secteur denté (34) et la au moins une butée (40) solidaire du secteur denté (34) forment un ensemble monobloc.

3. Actionneur (30) selon l'une des revendications précédentes, dans lequel la au moins une butée (42) solidaire de la tige (32) s'étend depuis la tige (32) selon une direction orthogonale à l'axe de rotation (A) et présente un profil s'amincissant depuis la tige (32) dans une direction parallèle à l'axe de rotation (A) en direction du secteur denté (34).

4. Actionneur (30) selon l'une des revendications précédentes, dans lequel la au moins une butée (42) solidaire de la tige (32) comprend au moins une surface de contact (44) s'étendant depuis la butée (42) dans une direction orthogonale à l'axe de rotation (A), la surface de contact (44) étant plane.

5. Actionneur (30) selon l'une des revendications précédentes, comprenant un dispositif anti-rotation (46) comprenant :
- une pièce de réception (48) comprenant une gorge de réception (50),
- un moyen anti-rotation (52) monté dans la gorge de réception (50) et solidaire de la tige (32),
le moyen anti-rotation (52) et la gorge de réception (50) étant conformés de sorte que la tige (32) soit bloquée en rotation autour de l'axe (A) par rapport à la pièce de réception (48) et mobile en translation selon l'axe (A) par rapport à la pièce de réception (48),
et dans lequel le moyen anti-rotation (52) comprend au moins une butée (42) de la paire de butées (48) solidaire de la tige (32).

6. Actionneur (30) selon l'une des revendications précédentes, dans lequel chaque butée (40, 42) d'une paire de butées (48) est conformée pour absorber les mouvements relatifs entre le secteur denté (34) et la tige (32).

7. Actionneur (30) selon l'une des revendications précédentes, dans lequel le moyen d'amortissement (36) comprend une première et une deuxième paire de butées (38), une butée (40) de chaque paire de butées (38) étant solidaire du secteur denté (34) et une butée (42) de chaque paire de butées (38) étant solidaire de la tige (32).

8. Actionneur (30) selon la revendication précédente, dans lequel les butées (40) solidaires du secteur denté (34) sont symétriques par rapport à l'axe de rotation (A).

9. Vanne (10), de circulation de fluide comprenant :
- un corps de vanne (12) délimitant un conduit (14) de circulation de fluide,
- un obturateur (16) mobile en translation entre une première position extrême, dite position d'ouverture, permettant le passage du fluide dans le conduit (14) et une deuxième position extrême, dite position de fermeture, empêchant le passage du fluide dans le conduit (14),
- un actionneur (30) selon l'une des revendications précédentes, dans lequel l'obturateur (16) est lié à la tige (32) de l'actionneur.

10. Vanne (10) selon la revendication 9, dans laquelle les butées (40, 42) d'une paire de butées (38) sont configurées pour présenter une zone de recouvrement (Z) supérieure ou égale à 0,5 mm dans la direction de l'axe de rotation (A) lorsque l'obturateur (16) atteint la position d'ouverture de la vanne.

11. Vanne (10) selon l'une des revendications 10 ou 11, dans laquelle la vanne (10) est une vanne est du type vanne de recirculation des gaz d'échappement, notamment du type haute pression.

## Patentansprüche

1. Aktuator (30), der zur Integration in ein Ventil (10) für einen Kraftfahrzeugmotor bestimmt ist, beinhaltend:
- einen Zahnsektor (34), der um eine Drehachse (A) drehbeweglich ist,
- einen Schaft (32), der auf die Drehachse (A) zentriert ist und gemäß der Drehachse (A) translatorisch beweglich ist, und
- ein Dämpfungsmittel (36), das mindestens ein Paar Anschläge (38) beinhaltet, wobei mindestens ein Anschlag (40) fest mit dem Zahnsektor (34) verbunden ist und mindestens ein Anschlag (42) fest mit dem Schaft (32) verbunden ist,
- und wobei mindestens ein Anschlag (40, 42) des Paares Anschläge (38) dazu eingerichtet ist, die relativen Bewegungen zwischen dem Zahnsektor (34) und dem Schaft (32) zu absorbieren, wobei die Anschläge dazu konfiguriert sind, simultan in Kontakt zu treten, wenn ein Verschlusselement eine Öffnungsposition des Ventils (10) erreicht,
- wobei sich der mindestens eine Anschlag (40), der fest mit dem Zahnsektor (34) verbunden ist, gemäß der Drehachse (A) von dem Zahnsektor (34) erstreckt und ein Profil aufweist, das sich von dem Zahnsektor (34) entlang der Drehachse (A) verjüngt.

2. Aktuator (30) nach dem vorhergehenden Anspruch, wobei der Zahnsektor (34) und der mindestens eine Anschlag (40), der fest mit dem Zahnsektor (34) verbunden ist, eine einstückige Anordnung bilden.

3. Aktuator (30) nach einem der vorhergehenden Ansprüche, wobei sich der mindestens eine Anschlag (42), der fest mit dem Schaft (32) verbunden ist, gemäß einer zu der Drehachse (A) orthogonalen Richtung von dem Schaft (32) erstreckt und ein Profil aufweist, das sich von dem Schaft (32) in einer zu der Drehachse (A) parallelen Richtung in Richtung des Zahnsektors (34) verjüngt.

4. Aktuator (30) nach einem der vorhergehenden Ansprüche, wobei der mindestens eine Anschlag (42), der fest mit dem Schaft (32) verbunden ist, mindestens eine Kontaktfläche (44) beinhaltet, die sich von dem Anschlag (42) in einer zu der Drehachse (A) orthogonalen Richtung erstreckt, wobei die Kontaktfläche (44) eben ist.

5. Aktuator (30) nach einem der vorhergehenden Ansprüche, der eine Antidrehvorrichtung (46) beinhaltet, die Folgendes beinhaltet:
- ein Aufnahmeteil (48), das eine Aufnahmenut (50) beinhaltet,
- ein Antidrehmittel (52), das in der Aufnahmenut (50) montiert ist und fest mit dem Schaft (32) verbunden ist, wobei das Antidrehmittel (52) und die Aufnahmenut (50) so eingerichtet sind, dass der Schaft (32) mit Bezug auf das Aufnahmeteil (48) in seiner Drehung um die Achse (A) blockiert ist und mit Bezug auf das Aufnahmeteil (48) gemäß der Achse (A) translatorisch beweglich ist,
und wobei das Antidrehmittel (52) mindestens einen Anschlag (42) des Paares Anschläge (48) beinhaltet, der fest mit dem Schaft (32) verbunden ist.

6. Aktuator (30) nach einem der vorhergehenden Ansprüche, wobei jeder Anschlag (40, 42) eines Paares Anschläge (48) dazu eingerichtet ist, die relativen Bewegungen zwischen dem Zahnsektor (34) und dem Schaft (32) zu absorbieren.

7. Aktuator (30) nach einem der vorhergehenden Ansprüche, wobei das Dämpfungsmittel (36) ein erstes und ein zweites Paar Anschläge (38) beinhaltet, wobei ein Anschlag (40) jedes Paares Anschläge (38) fest mit dem Zahnsektor (34) verbunden ist und ein Anschlag (42) jedes Paares Anschläge (38) fest mit dem Schaft (32) verbunden ist.

8. Aktuator (30) nach dem vorhergehenden Anspruch, wobei die Anschläge (40), die fest mit dem Zahnsektor (34) verbunden sind, mit Bezug auf die Drehachse (A) symmetrisch sind.

9. Ventil (10) zur Zirkulation von Fluid, beinhaltend:
- einen Ventilkörper (12), der eine Fluidzirkulationsleitung (14) begrenzt,
- ein Verschlusselement (16), das zwischen einer ersten Endposition, als Öffnungsposition bezeichnet, die den Durchgang des Fluids in der Leitung (14) gestattet, und einer zweiten Endposition, als Schließposition bezeichnet, die den Durchgang des Fluids in der Leitung (14) verhindert, translatorisch beweglich ist,
- einen Aktuator (30) nach einem der vorhergehenden Ansprüche, wobei das Verschlusselement (16) mit dem Schaft (32) des Aktuators verbunden ist.

10. Ventil (10) nach Anspruch 9, wobei die Anschläge (40, 42) eines Paares Anschläge (38) dazu konfiguriert sind, in der Richtung der Drehachse (A) einen Überlappungsbereich (Z) größer als oder gleich 0,5 mm aufzuweisen, wenn das Verschlusselement (16) die Öffnungsposition des Ventils erreicht.

11. Ventil (10) nach einem der Ansprüche 10 oder 11, wobei das Ventil (10) ein Ventil vom Typ Abgasrückführungsventil, insbesondere vom Hochdrucktyp, ist.

## Claims

1. Actuator (30), intended to be integrated in a valve (10) for a motor vehicle engine, comprising:
- a toothed sector (34) that is able to rotate about an axis of rotation (A),
- a stem (32) centred on the axis of rotation (A) and able to move in translation along the axis of rotation (A), and
- a damping means (36) comprising at least one pair of stops (38), at least one stop (40) being as one with the toothed sector (34) and at least one stop (42) being as one with the stem (32),
- and wherein at least one stop (40, 42) of the pair of stops (38) is shaped to absorb the relative movements between the toothed sector (34) and the stem (32), the stops being configured to come into contact simultaneously when a shut-off member reaches a position of opening of the valve (10),
- the at least one stop (40) as one with the toothed sector (34) extending from the toothed sector (34) along the axis of rotation (A) and having a profile that tapers from the toothed sector (34) along the axis of rotation (A) .

2. Actuator (30) according to the preceding claim, wherein the toothed sector (34) and the at least one stop (40) as one with the toothed sector (34) form a one-piece assembly.

3. Actuator (30) according to one of the preceding claims, wherein the at least one stop (42) as one with the stem (32) extends from the stem (32) in a direction orthogonal to the axis of rotation (A) and has a profile that tapers from the stem (32) in a direction parallel to the axis of rotation (A) towards the toothed sector (34) .

4. Actuator (30) according to one of the preceding claims, wherein the at least one stop (42) as one with the stem (32) comprises at least one contact surface (44) extending from the stop (42) in a direction orthogonal to the axis of rotation (A), the contact surface (44) being flat.

5. Actuator (30) according to one of the preceding claims, comprising an anti-rotation device (46) comprising:
- a receiving part (48) comprising a receiving groove (50),
- an anti-rotation means (52) mounted in the receiving groove (50) and as one with the stem (32),
the anti-rotation means (52) and the receiving groove (50) being shaped in such a way that the stem (32) is blocked in rotation about the axis (A) relative to the receiving part (48) and able to move in translation along the axis (A) relative to the receiving part (48),
and wherein the anti-rotation means (52) comprises at least one stop (42) of the pair of stops (48) that is as one with the stem (32).

6. Actuator (30) according to one of the preceding claims, wherein each stop (40, 42) of a pair of stops (48) is shaped to absorb the relative movements between the toothed sector (34) and the stem (32).

7. Actuator (30) according to one of the preceding claims, wherein the damping means (36) comprises a first and a second pair of stops (38), one stop (40) of each pair of stops (38) being as one with the toothed sector (34) and one stop (42) of each pair of stops (38) being as one with the stem (32).

8. Actuator (30) according to the preceding claim, wherein the stops (40) as one with the toothed sector (34) are symmetrical with respect to the axis of rotation (A) .

9. Fluid circulation valve (10) comprising:
- a valve body (12) delimiting a fluid circulation duct (14),
- a shut-off member (16) that is able to move in translation between a first extreme position, called opening position, allowing the fluid to pass into the duct (14) and a second extreme position, called closure position, preventing the fluid from passing into the duct (14),
- an actuator (30) according to one of the preceding claims, wherein the shut-off member (16) is connected to the stem (32) of the actuator.

10. Valve (10) according to Claim 9, wherein the stops (40, 42) of a pair of stops (38) are configured to have an overlap zone (Z) greater than or equal to 0.5 mm in the direction of the axis of rotation (A) when the shut-off member (16) reaches the position of opening of the valve.

11. Valve (10) according to either of Claims 10 and 11, wherein the valve (10) is a valve of the exhaust gas recirculation valve type, in particular of the high pressure type.
